(19)

Europäisches
Patentamt
European
Patent Office
Office européen
des brevets

(11)     EP 2 378 856 B1

(12)     **EUROPEAN PATENT SPECIFICATION**

| | |
|---|---|
| (45) Date of publication and mention of the grant of the patent:<br>**15.10.2014 Bulletin 2014/42** | (51) Int Cl.:<br>**A01G 23/083** (2006.01) |
| (21) Application number: **10731092.2** | (86) International application number:<br>**PCT/FI2010/050016** |
| (22) Date of filing: **15.01.2010** | (87) International publication number:<br>**WO 2010/081938 (22.07.2010 Gazette 2010/29)** |

(54) **HARVESTER HEAD**

ERNTEVORSATZGERÄT

TETE D'ABATTAGE-EBRANCHAGE

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR** | (72) Inventor: **HANNE, Kari**<br>**FI-36200 Kangasala (FI)** |
| (30) Priority: **16.01.2009  FI 20095037** | (74) Representative: **Tampereen Patenttitoimisto Oy**<br>**Hermiankatu 1 B**<br>**33720 Tampere (FI)** |
| (43) Date of publication of application:<br>**26.10.2011  Bulletin 2011/43** | (56) References cited:<br>**FI-C- 95 529          US-A- 5 785 101**<br>**US-A1- 2008 178 963     US-A1- 2008 178 963** |
| (73) Proprietor: **Waratah OM Oy**<br>**80101 Joensuu (FI)** | |

## Description

The invention relates to a harvester head.

Two-roll driven harvester heads of prior art, that is, those equipped with two feed rolls and 3+1 delimbing blades, comprise a frame with a front blade and upper delimbing blades installed before the feed rolls, as well as one lower delimbing blade after them. The part of the frame of the harvester head on the side of the front blade and the upper delimbing blades will be called, in this presentation, the upper part of the frame of the harvester head, and the part following the feed rolls will be called the lower part, because the first-mentioned frame part is higher than the part following the feed rolls when the harvester head is placed in a felling position, against a tree, before the cutting of the tree. The front blade is placed, in relation to the tree trunk, in such a way that it cuts off the branches closest to the side of the frame of the harvester head. The primary function of the upper delimbing blades is to cut off the branches on the side of the frame and to support them in the lateral direction. The lower delimbing blade takes care of the delimbing of the branches left on the opposite side of the frame of the harvester head (below the frame when the harvester head is in the delimbing position). Furthermore, the lower delimbing blade is important, because particularly large tree trunks need to be supported also from below in such a harvester grapple during their delimbing. Normally, the lower delimbing blade is placed, in a direction transverse to the feeding direction of the tree trunk, on the opposite side of a chain saw used as a cross-cutting device, and, in the direction of feeding the tree trunk, between the chain saw and the feed rolls. Thus, a large trunk may also be supported partly to the support structures of the chain saw on its opposite side, that is, in practice, to the saw box that is normally used as a shield for the guide bar.

Harrester heads are commonly known, see e. g. US 5785101. Another harvester head of prior art, two-roll driven and equipped with 3+1 delimbing blades, is presented, for example, in US 6,318,425. In said document, the lower delimbing blade is placed on the opposite side of the chain saw used as the cross-cutting device, between the feed rolls and the chain saw in the direction of feeding the tree trunk.

When processing bush-like trees, for example in stands marked for thinning and hardwood cutting, it is often difficult to bring a harvester head with 3+1 delimbing blades into a narrow space. The situation can be facilitated by making the harvester head as compact as possible in its mechanical structure. A significant factor which increases the space requirement of the harvester head in prior art harvester heads with 3+1 delimbing blades is that the lower delimbing blade that still normally belongs to them is placed on the opposite side of the saw box (as, for example, in US 6,318,425), wherein a separate frame structure has to be provided on the opposite side of the saw box, for installing the lower delimbing blade. The significance of this is further increased by the fact that in bush-like crop, the lower parts of the tree trunks are normally closer to each other than the upper parts, because the trees growing in a bush-like manner are fan-shaped. In other words, in bush-like stands marked for cutting, the greatest benefit would be achieved particularly by a narrow and compact lower part of the harvester head that is on the side of the butt end of the tree when the tree is gripped. With respect to the lower delimbing blade, this means that it should be preferably eliminated. However, the lower delimbing blade is needed during the feeding of the tree trunks when the harvester head is used for final cutting, wherein the diameter of the trunks is significantly larger than in trees processed during thinning. Thus, the total elimination of the lower delimbing blade in the harvester head is out of question.

Document FI 84128 also discloses a two-roll driven harvester head, in which an attempt has been made to solve the above-mentioned problem in such a way that the lower delimbing blade is placed on the side of the chain saw used as the cross-cutting device, and when the delimbing blade is not needed, said delimbing blade can be turned from its normal delimbing position into a so-called expanded saw box used as a common protective casing for the chain saw and for the lower delimbing blade. In this solution, however, the lower delimbing blade still requires the expansion in the saw box as mentioned in the publication, increasing the size of the saw box and adding protrusions which may complicate the fitting of the harvester head between trees that grow close to each other, and reduce the savings in the space and weight to be obtained by the solution. Furthermore, this expansion has to be made the larger, the longer and more curved the lower delimbing blade is, in other words, the better it supports and delimbs the tree during the delimbing.

It is an aim of the present invention to introduce a novel two-roll driven harvester head with 3+1 delimbing blades, as well as to eliminate the above-mentioned drawbacks relating to the prior art. In particular, it is an aim of the invention to introduce a harvester head with 3+1 delimbing blades, which is more suitable for thinning dense and bush-like stands marked for cutting, and which is more compact than prior harvester heads with 3+1 delimbing blades, particularly with respect to the structure of the lower part, but which can still be well used for the processing of both small and large trees.

The harvester head according to the invention is characterized in what will be presented in the claims.

The harvester head according to the invention is characterized in that

- the lower delimbing blade is arranged to turn to a delimbing position around the tree trunk and to a space-saving position between the outer surface of the tree trunk and the frame of the harvester head, away from the path of the tree trunk, and that
- in the space-saving position, the lower delimbing blade is between the outer surface of the tree trunk and the frame of the harvester head in such a way that the end of the delimbing blade points in the direction of the frame of the harvester head, wherein at least part of it extends above the path of the tree trunk.

The inventive idea of the harvester head according to the invention is that the lower delimbing blade, placed on the side of the saw box in the frame of the delimbing head, is placed in connection with the saw box in such a way that it can be turned to such a space-saving position, in which at least . part of it is above the path of the tree trunk, wherein the protective casing for the chain saw used as a cross-cutting device, or other protective structures between the cross-cutting device and the feeding devices on the side of the cross-cutting device, do not need to be made larger to protect the lower delimbing blade. As a result, the harvester head with 3+1 delimbing blades can be made as small and compact in its lower part as a harvester head with only a chain saw after the feeding devices.

With this kind of a harvester head with 3+1 delimbing blades, a number of significant advantages to the prior art are achieved. When thinning bush-like stands marked for cutting, it is easier than before to fit the harvester head in narrow spaces, because the lower delimbing blade belonging to the harvester head is placed in the same mounting structure as the cross-cutting device, and because the lower delimbing blade can be turned to such a space-saving position that the space requirement of the lower part of the harvester head corresponds to that of a harvester head with no lower delimbing blade at all. When processing large trees, however, the lower delimbing blade can be taken into use by turning it from the above-mentioned space-saving position to a position under the path of the tree trunk so that the delimbing blade can be used to support the trunk during its feeding in the same way as in known harvester heads with 3+1 delimbing blades. Another advantage of such a harvester head is the reduction in the weight of the harvester head, and the fact that the structures of the chain saw used as the cross-cutting device are dimensioned to be durable, wherein the lower delimbing blade to be installed on the side of the cross-cutting device can be equipped with a strong and durable bearing structure. Further advantages of such a harvester head include the fact that the lower delimbing blade is, in such a harvester head, better shielded against impacts from below than in conventional solutions, and the fact that when the tree is gripped, the grapple of such a harvester head can hold a larger butt end of a tree, because in such a harvester head there are no parts of the harvester frame or no saw box larger than normal that would delimit the thickness of the butt end on the opposite side of the cross-cutting device coming to the vicinity of the roots of the tree.

In the following, the invention will be described in more detail with reference to the appended drawings, in which

Fig. 1 shows a side view of a harvester head according to the invention when the harvester head is in the position of felling a tree and the lower delimbing blade is in the space-saving position,

Fig. 2 shows a side view of the lower part of the harvester head of Fig. 1 when the harvester head is in the position of felling a tree and the lower delimbing blade is in the standby position,

Fig. 3 shows a side view of the lower part of the harvester head of the preceding figures when the harvester head is in the position of feeding a tree and the lower delimbing blade is in the space-saving position, and

Fig. 4 shows a side view of the lower part of the harvester head of the preceding figures when the harvester head is in the position of feeding a tree and the lower delimbing blade is in the standby position.

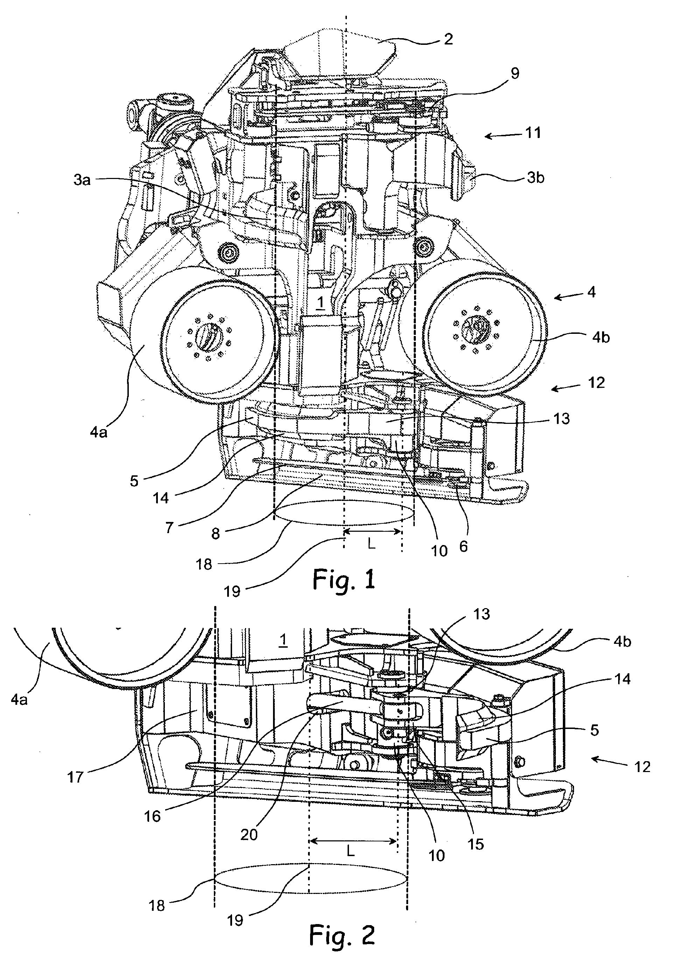

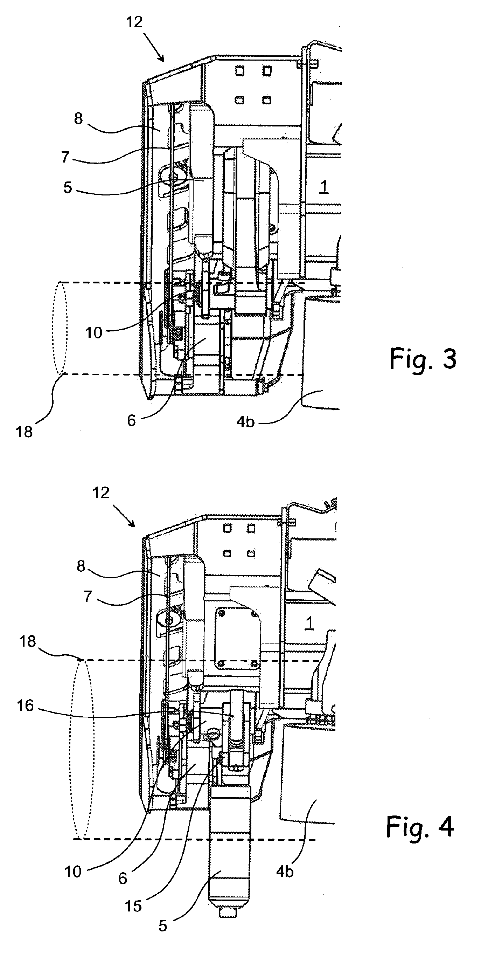

Figures 1 to 4 show a harvester head with 3+1 delimbing blades according to the invention, implemented in such a way that it can be used for thinning young and dense and/or bush-like stands marked for cutting, as well as for final cutting of older forest. The harvester head of Figs. 1 to 4 comprises a frame 1, a front blade 2, upper delimbing blades 3a and 3b, a feeding device 4, a lower delimbing blade 5, as well as a cross-cutting device 6. In Figs. 1 and 2, the harvester head is in the felling position, that is, the position in which the harvester head comes against the butt end of the tree at the initial step of felling the tree. In Fig. 1, the lower delimbing blade 5 of the harvester head is in a space-saving position, that is, a position in which it is not intended to be used for delimbing the tree, and in Fig. 2, it is in the standby position, or the position in which it is intended to be used for delimbing the tree. In Figs. 3 and 4, the lower part 12 of the harvester head is shown in the feeding position, seen from the side opposite to the chain saw used as a cross-cutting device 6, in other words, in the position in which the delimbing of the tree and its cross-cutting to logs or billets takes place. In Fig. 3, the lower delimbing blade is in the space-saving position, and in Fig. 4, it is in the standby position.

Figures 1 and 4 also show, sketched with a broken line, the path 18 of the tree trunk to be processed by the harvester head, and the central line 19 of the harvester head. It should be noticed that the path 18 of the tree trunk refers, in this context, to an area having the shape of the cross-section of the tree trunk placed between the frame, feeding devices and delimbing blades of the harvester head, inside which said tree trunk fits (only just) to move without an obstacle. The central line of the harvester head is normally the same as the central line of the tree trunk.

In the harvester head shown in Figs. 1 to 4, the upper part 11 of the frame 1, the front blade 2, the upper delimbing blades 3a and 3b, as well as the feeding device 4 shown in Fig. 1 have a structure that is known as such. In this embodiment, the front blade 2 is attached to the frame of the harvester head by means of an actuator in an adjustable manner. The upper delimbing blades 3a and 3b are connected to the frame of the harvester head to be turned against the tree trunk by a hydraulic cylinder. In this case, the feeding device 4 is formed by feeding rolls connected to the ends of swivelling arms known as such and against the tree trunk under their control. The cross-cutting device 6, which is also shown in Figs. 2 to 4, is a chain saw driven by a hydraulic motor and comprising a guide bar 7 performing a turning movement, or the cutting movement, in the transverse direction of the tree trunk. In the lower part 12 of the frame of the harvester head, a saw box 8 is provided for the guide bar 7, in which the guide bar 7 is kept during intervals between sawing operations to protect the guide bar 7 from impacts possibly caused by the tree trunk and its branches during feeding. In this embodiment, there is also another chain saw 9 that is placed between the front blade 2 and the upper delimbing blades 3a and 3b as shown in Fig. 1.

The lower delimbing blade 5 is mounted on bearings in a fixing joint 10 that is placed in the saw box 8, as shown in Figs. 1 and 2, between the feeding device 4 and the chain saw 6 in the direction of movement of the tree trunk, and slightly below the path 18 of the tree trunk in the direction transverse to the direction of movement of the tree trunk. The distance L between the fixing joint 10 of the lower delimbing blade 5 and the central line 19 of the harvester head, shown in the figures, is normally determined so that

$$kh - 300 \text{ mm} < L < kh - 150 \text{ mm,}$$

in which

    L = the distance between the fixing joint and the central line 19 of the harvester head in the longitudinal direction,
    kh = the diameter of the trunk at the point of felling.

Thanks to the fixing joint 10 positioned in this way, there is sufficient space for the lower delimbing blade 5 with the required length to turn to the space-saving position shown in Fig. 1, that is, to such a position that the end of the lower delimbing blade points to the direction of the lower part 12 of the frame of the harvester head that connects the cross-cutting device 6 to the rest of the harvester head, as well as down to the standby position, shown in Figs. 2 and 4, from which position the lower delimbing blade can be turned to the delimbing position around the tree trunk when the trunk lies between the upper delimbing blades 3a and 3b and the feed rolls 4a and 4b of the feeding device 4, to be moved by the same. In the standby position, the lower delimbing blade 6 is in its outermost position. The magnitude of the turning movement needed for turning from this position to the delimbing position will depend on the diameter of the tree trunk. It should also be noted that in the lower part 12 of the frame, a recess 17 is provided at the point of connection of the lower delimbing blade 5 so that the lower delimbing blade 5 can be brought as far away from the path 18 of the tree trunk as possible in the space-saving position. In the application of Figs. 1 to 4, the lower delimbing blade 5 is not visible from the direction of the front blade 2 when turned to the space-saving position.

The lower delimbing blade 5 consists of the fixing joint 10 formed in the above mentioned way in the frame 1 of the harvester head, a swivelling arm 13, and a blade part 14 with a curved shape formed on its surface on the side of the tree trunk, having cutting blades implemented in a way known as such and cutting the branches in the trunk during delimbing. The swivelling arm 13 of the lower delimbing blade has a connecting lug 15 for the movable end of the actuator 16 turning the lower delimbing blade. This connecting lug 15 is placed in the swivelling arm 13 on the side of the tree trunk (that is, inside the delimbing blade), between the blade part 14 and the fixing joint 10, wherein the actuator 16 also has to be placed on the tree trunk side of the lower delimbing blade 5. This structure has the advantage that the hydraulic cylinder 16 can thus be brought as close to the lower delimbing blade 5 as possible, and thereby also to the vicinity of the lower part 12 of the frame and the parts of the cross-cutting device 6, in a way that requires as little space as possible.

The end of the lower delimbing blade 5 is shaped and made so long that it extends around the tree trunks within the diameter area of the tree trunks to be processed with the harvester head. Thus, the end of the lower delimbing blade 5 supports the tree trunks also slightly from the side opposite to the saw box 8. Thanks to this, the tree trunks remain well on the lower delimbing blade 5 during delimbing, even if there is no other support on the opposite side of the lower delimbing blade 5 as there is in such prior art harvester heads with 3+1 delimbing blades, in which the lower delimbing blade is placed on the opposite side of the saw box, the saw box being used as a support on the opposite side of the lower delimbing blade. Furthermore, the placement of the upper delimbing blades 3a and 3b and the lower delimbing blade 5 in relation to the tree trunk is implemented, in this embodiment, in such a way that the uppermost delimbing blade 3b of the upper delimbing blades 3a and 3b is placed on the same side of the tree as the lower delimbing blade 5, whereas the second highest delimbing blade 3a is on the side opposite to these. Such a placement of the delimbing blades prevents the tree trunks supported by the lower delimbing blade 5 from turning on a slant, as well as disadvantages possibly caused by that.

In this case, the actuator 16 turning the lower delimbing blade 5 is a double-acting hydraulic cylinder, whose stationary end is fixed inside the lower part 12 of the frame (not shown in the drawings) and whose movable end is fixed from said position via an opening 20 inside the frame to the side of the saw box and connected to a fixing lug 15 on the tree trunk side of the lower delimbing blade. Thus, the return movement of the hydraulic cylinder 16 will turn the end of the lower delimbing blade 5 towards the saw box 8, and its working movement will turn it away; in other words, the turning of the lower delimbing blade 5 towards the tree trunks is effected with a pulling movement by the moving end of the hydraulic cylinder 16. Because the connecting point of the moving end of the hydraulic cylinder 16 is, in the turning arm 13 of the lower delimbing blade 5, between the blade part 14 that cuts off branches of the tree and the fixing joint 10, the hydraulic cylinder 16 can be placed inside the saw box 8 in such a way that no part of it will protrude outside the edges of the saw box 8 or outside parts of the lower part 12 of the frame of the harvester head at this point. Thanks to this, no part of the lower delimbing blade 5 will, in the space-saving position, form a part in the lower part 12 of the frame which would increase its space requirement with respect to the case in which there was no lower delimbing blade 5 at all.

When thinning a dense and/or bush-like stand marked for cutting by means of the harvester head shown in Figs. 1 to 4, the lower delimbing blade 5 is turned to the space-saving position shown in Figs. 1 and 3, that is, in the recess 17 in the lower part 12 of the frame. Thus, the lower part of the harvester head has, in the above-mentioned way, the same size as the lower part of a harvester head without a lower delimbing blade 5. Moreover, the lower delimbing blade 5 in the space-saving position does not cause any such protrusions in the lower part of the harvester head which would grip or hit tree trunks close to each other, or their branches. At the beginning of felling, the harvester head is fitted at the butt end of the tree, and the tree trunk is only gripped by the upper delimbing blades 3a, 3b as well as the feed rolls 4a, 4b of the feeding device 4. After that, the guide bar 7 of the chain saw 6 performs a cutting movement, and as a result, the tree falls and turns in the normal way to a horizontal feeding position. From this, the delimbing and cross-cutting of the tree can be continued in a way known as such; without the use of the lower delimbing blade 5, because trees to be felled in forest thinning are still so small in size and weight that they do not need to be supported from below the tree trunk during the delimbing.

In a more sparsely stocked stand marked for cutting, in which the tree trunks are significantly thicker and heavier than in forest thinning, that is, for example, in final cutting, the lower delimbing blade 5 is also taken into use: Thus, before starting the felling, the lower delimbing blade 5 is turned to the standby position shown in Figs. 2 and 4 by means of a working motion of the hydraulic cylinder 16 moving the same. The harvester head is then brought to the butt end of the tree, and both the upper delimbing blades 3a, 3b and the lower delimbing blade 5, as well as the feed rolls 4a, 4b of the feeding device, are turned against the tree trunk. After the trunk has been firmly placed in the grapple of the harvester head, the guide bar 7 of the chain saw 6 performs a cutting movement, wherein the tree falls and the harvester head turns to the feeding position shown in Figs. 3 and 4. From now on, the processing of the tree will be continued in the same way as by applying any harvester head known as such, comprising a lower delimbing blade turnable underneath the tree trunk. The difference is, however, that in the harvester head of Figs. 1 to 4, the tree trunk is at no stage supported to the saw box on the opposite side of the lower delimbing blade, which is the case in many harvester heads of prior art, but in the harvester head of Figs. 1 to 4, the sufficient support for the tree trunk in the direction opposite to the saw box is secured by the design of the end of the lower delimbing blade 5, implemented in the above-mentioned way, as well as by the placement of the delimbing blades with respect to the tree trunk.

The harvester head according to the invention can be implemented in a way different from the example embodiment presented above. For example, the frame of the harvester head, the feeding device, the front blade, the upper delimbing blades, and the cross-cutting device can be implemented, in principle, in any way known as such. It is possible to omit the second chain saw belonging to the embodiment of Figs. 1 to 4, between the front blade and the upper delimbing blades, and to use, for example, a stationary front blade instead of an adjustable front blade. The structures of the frame of the harvester head can be designed, for example, in such a way that the lower delimbing blade and the hydraulic cylinder turning the same can be shielded better between the cross-cutting device and the feeding devices in the frame. In an embodiment, it is possible to try to place the mounting point of the lower delimbing blade further below the path of the tree trunk. Thus, the lower delimbing blade can be made shorter, and it can still be made to support the tree trunk during delimbing more from the opposite side of the saw box, which improves particularly the holding of large trunks in the grapple.

The harvester head according to the invention is not restricted to the example embodiment presented above, but it may vary within the scope of the appended claims.

## Claims

1.   A harvester head comprising:

   - the frame (1) of a harvester head to be connected to the end of the hoist boom of a forest machine,
   - a feeding device (4) for moving a tree trunk,
   - a front blade (2) and/or upper delimbing blades (3a, 3b) before the feeding device (4),
- a cross-cutting device (6) for cutting tree trunks after the feeding device (4),
- a lower delimbing blade (5) between the feeding device (4) and the cross-cutting device (6), installed on the side of the cross-cutting device (6) in the frame (1) of the harvester head,

**characterized in that** further in the harvester head,

- the lower delimbing blade (5) is arranged to turn into a delimbing position around the tree trunk and into a space-saving position between the outer surface of the tree trunk and the frame (1) of the harvester head, away from the path line (18) of the tree trunk, and that
- in the space-saving position, the lower delimbing blade (5) is between the outer surface of the tree trunk and the frame (1) of the harvester head so that its end points in the direction of the frame (1) of the harvester head, wherein at least part of it extends above the path line (18) of the tree trunk.

2. The harvester head according to claim 1, **characterized in that** the lower delimbing blade (5) is placed after the feeding devices in the frame (1) of the harvester head, at a recess (17) in the frame (1), so that the lower delimbing blade (5) can be turned into the recess (17), substantially invisible from the direction of the front blade (2) and the upper delimbing blades (3a, 3b).

3. The harvester head according to claim 1 or 2, **characterized in that** the lower delimbing blade (5) is arranged to be movable by a hydraulic cylinder (16), whose moving end is coupled to the lower delimbing blade (5) in such a way that a movement in the direction of the return movement of the moving end of the hydraulic cylinder (16) moves the lower delimbing blade (5) against the tree trunk in the harvester head.

4. The harvester head according to any of the claims 1 to 3, in which harvester head the lower delimbing blade (5) consists of a fixing joint (10) formed in the lower part (12) of the frame of the harvester head, a swivelling arm (13) connected to the fixing joint (10) in a swivelling manner, and a blade part (14) formed in the swivelling arm, **characterized in that** the moving end of the hydraulic cylinder (16) turning the lower delimbing blade (5) is connected to the lower delimbing blade (5) on its tree trunk side.

5. The harvester head according to claim 4, **characterized in that** the moving end of the hydraulic cylinder (16) is connected to a connecting member (15) between the blade part (14) in the swivelling arm (13) of the lower delimbing blade (5) and the fixing joint (10).

6. The harvester head according to any of the claims 1 to 5, **characterized in that** the distance L between the fixing joint (10) of the lower delimbing blade (5) and the longitudinal central line (19) of the harvester head is kh - 300 mm < L < kh - 150 mm, in which kh is the diameter of the trunk at the point of felling.

7. The harvester head according to any of the claims 1 to 6, **characterized in that** the uppermost delimbing blade (3b) of the upper delimbing blades (3a, 3b) is placed on the same side of the tree trunk as the lower delimbing blade (5).

**Patentansprüche**

1. Erntevorsatzgerät, welches Folgendes aufweist:

- den Rahmen (1) eines Erntevorsatzgerätes zur Verbindung mit dem Ende des Windenträgers einer Forstmaschine,
- eine Zuführvorrichtung (4) zum Bewegen eines Baumstamms,
- eine Frontklinge (2) und/oder obere Entastungsklingen (3a, 3b) vor der Zuführvorrichtung (4),
- eine Querschneidvorrichtung (6) zum Schneiden von Baumstämmen hinter der Zuführvorrichtung (4),
- eine untere Entastungsklinge (5) zwischen der Zuführvorrichtung (4) und der Querschneidvorrichtung (6), die auf der Seite der Querschneidvorrichtung (6) in dem Rahmen (1) des Erntevorsatzgerätes eingebaut ist,

**dadurch gekennzeichnet, dass** in dem Erntevorsatzgerät des Weiteren
die untere Entastungsklinge (5) so angeordnet ist, dass sie sich in eine Entastungsposition um den Baumstamm und in eine Platz sparende Position zwischen der Außenfläche des Baumstamms und dem Rahmen (1) des Erntevorsatzgerätes weg von der Weglinie (18) des Baumstamms dreht, und dass sich die untere Entastungsklinge (5) in der Platz sparenden Position zwischen der Außenfläche des Baumstamms und dem Rahmen (1) des Erntevorsatzgerätes befindet, so dass deren Ende in Richtung des Rahmens (1) des Erntevorsatzgerätes weist, wobei sich zumindest ein Teil davon über die Weglinie (18) des Baumstamms erstreckt.

2. Erntevorsatzgerät nach Anspruch 1, **dadurch gekennzeichnet, dass** die untere Entastungsklinge (5) hinter den Zuführvorrichtungen in dem Rahmen (1) des Erntevorsatzgerätes an einer Ausnehmung (17) in dem Rahmen (1) platziert wird, so dass die untere Entastungsklinge (5) in die Ausnehmung (17) gedreht werden kann, so dass sie aus Richtung der Frontklinge (2) und der oberen Entastungsklingen (3a, 3b) im Wesentlichen nicht sichtbar ist.

3. Erntevorsatzgerät nach Anspruch 1 oder 2, **dadurch gekennzeichnet, dass** die untere Entastungsklinge (5) so angeordnet ist, dass sie durch einen Hydrozylinder (16) beweglich ist, dessen bewegliches Ende derart an die obere Entastungsklinge (5) gekoppelt ist, dass eine Bewegung in Richtung der Rückbewegung des beweglichen Endes des Hydrozylinders (16) die untere Entastungsklinge (5) gegen den Baumstamm in dem Erntevorsatzgerät bewegt.

4. Erntevorsatzgerät nach einem der Ansprüche 1 bis 3, bei welchem Erntevorsatzgerät die untere Entastungsklinge (5) aus einem Befestigungsgelenk (10), das in dem unteren Teil (12) des Rahmens des Erntevorsatzgerätes gebildet ist, einem Schwenkarm (13), der schwenkbar mit dem Befestigungsgelenk (10) verbunden ist, und einem Klingenteil (14), der in dem Schwenkarm gebildet ist, besteht, **dadurch gekennzeichnet, dass** das bewegliche Ende des Hydrozylinders (16), das die untere Entastungsklinge (5) dreht, mit der unteren Entastungsklinge (5) auf dessen Baumstammseite verbunden ist.

5. Erntevorsatzgerät nach Anspruch 4, **dadurch gekennzeichnet, dass** das bewegliche Ende des Hydrozylinders (16) mit einem Verbindungsglied (15) zwischen dem Klingenteil (14) in dem Schwenkarm (13) der unteren Entastungsklinge (5) und dem Befestigungsgelenk (10) verbunden ist.

6. Erntevorsatzgerät nach einem der Ansprüche 1 bis 5, **dadurch gekennzeichnet, dass** der Abstand L zwischen dem Befestigungsgelenk (10) der unteren Entastungsklinge (5) und der Mittellängsachse (19) des Erntevorsatzgerätes kh - 300 mm < L < kh - 150 mm beträgt, wobei kh der Durchmesser des Stamms an der Stelle des Einschlags ist.

7. Erntevorsatzgerät nach einem der Ansprüche 1 bis 6, **dadurch gekennzeichnet, dass** sich die oberste Entastungsklinge (3b) der oberen Entastungsklingen (3a, 3b) auf der gleichen Seite des Baumstamms befindet wie die untere Entastungsklinge (5).

**Revendications**

1. Tête d'abattage-ébranchage comprenant :

   - le support (1) d'une tête d'abattage-ébranchage à relier à l'extrémité de la flèche principale d'une machine forestière,

   - un dispositif d'alimentation (4) pour déplacer un tronc d'arbre,
   - une lame avant (2) et / ou des lames d'ébranchage supérieures (3a, 3b) avant le dispositif d'alimentation (4),
   - un dispositif de coupe transversale (6) pour couper des troncs d'arbre après le dispositif d'alimentation (4),
   - une lame d'ébranchage inférieure (5) entre le dispositif d'alimentation (4) et le dispositif de coupe transversale (6), installée sur le côté du dispositif de coupe transversale (6) dans le support (1) de la tête d'abattage-ébranchage,

   **caractérisée en ce que** en outre dans la tête d'abattage,

   la lame d'ébranchage inférieure (5) est agencée pour tourner dans une position d'ébranchage autour du tronc de l'arbre et dans une position d'économie d'espace entre la surface extérieure du tronc d'arbre et le support (1) de la tête d'abattage-ébranchage, à distance de la trajectoire (18) du tronc d'arbre, et **en ce que**

   dans la position d'économie d'espace, la lame d'ébranchage inférieure (5) est comprise entre la surface extérieure du tronc d'arbre et le support (1) de la tête d'abattage-ébranchage de telle sorte que ses points d'extrémité sont dans la direction du support (1) de la tête d d'abattage-ébranchage, dans laquelle au moins une partie de celui-ci s'étend au-dessus de la trajectoire (18) du tronc d'arbre.

2. Tête d'abattage-ébranchage selon la revendication 1, **caractérisé en ce que** la lame d'ébranchage inférieure (5) est placée après les dispositifs d'alimentation dans le support (1) de la tête d'abattage-ébranchage, au niveau d'un évidement (17) dans le support (1), de sorte que la lame d'ébranchage inférieure (5) peut être tournée dans l'évidement (17), sensiblement invisible à partir de la direction de la lame avant (2) et des lames d'ébranchage supérieures (3a, 3b).

3. Tête d'abattage-ébranchage selon la revendication 1 ou 2, **caractérisé en ce que** la lame d'ébranchage inférieure (5) est agencée pour être déplacée par un vérin hydraulique (16), dont l'extrémité mobile est couplée à la lame d'ébranchage inférieure (5) de telle une sorte qu'un mouvement dans la direction du mouvement de rappel de l'extrémité mobile du vérin hydraulique (16) déplace la lame d'ébranchage inférieure (5) contre le tronc d'arbre dans la tête d'abattage-ébranchage.

4. Tête d'abattage-ébranchage selon l'une quelconque des revendications 1 à 3, dans lequel la tête d'abattage-ébranchage de la lame d'ébranchage inférieure (5) est constituée d'une articulation de fixation (10) formé dans la partie inférieure (12) du support de la tête d'abattage, un bras pivotant (13) relié à l'articulation de fixation (10) d'une manière pivotante, et une partie de lame (14) formée dans le bras pivotant, **caractérisée en ce que** l'extrémité mobile du vérin hydraulique (16) tournant la lame d'ébranchage inférieure (5) est reliée à la lame d'ébranchage inférieure (5) sur le côté du tronc d'arbre.

5. Tête d'abattage-ébranchage selon la revendication 4, **caractérisée en ce que** l'extrémité mobile du vérin hydraulique (16) est reliée à un élément de liaison (15) entre la partie de lame (14) dans le bras pivotant (13) de la lame d'ébranchage inférieure (5) et l'articulation de fixation (10).

6. Tête d'abattage-ébranchage selon l'une quelconque des revendications 1 à 5, **caractérisé en ce que** la distance L entre l'articulation de fixation (10) de la lame d'ébranchage inférieure (5) et la ligne centrale longitudinale (19) de la tête d'abattage-ébranchage est $kh - 300\,mm < L < kh - 150\,mm$, où kh est le diamètre du tronc au point d'abattage.

7. Tête d'abattage-ébranchage selon l'une quelconque des revendications 1 à 6, **caractérisée en ce que** la lame d'ébranchage la plus élevée (3b) des lames d'ébranchage supérieures (3a, 3b) est placée sur le même côté du tronc d'arbre que la lame d'ébranchage inférieure (5).

Fig. 1

Fig. 2

Fig. 3

Fig. 4

**EP 2 378 856 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5785101 A
- US 6318425 B

- FI 84128